(19) Europäisches Patentamt
European Patent Office
Office européen des brevets

(11) **EP 4 553 913 A1**

(12) **EUROPEAN PATENT APPLICATION**

(43) Date of publication:
**14.05.2025 Bulletin 2025/20**

(21) Application number: **24210733.2**

(22) Date of filing: **05.11.2024**

(51) International Patent Classification (IPC):
*H01M 4/13* (2010.01)    *H01M 4/36* (2006.01)
*H01M 4/38* (2006.01)    *H01M 4/485* (2010.01)
*H01M 4/587* (2010.01)    *H01M 4/58* (2010.01)
*H01M 4/02* (2006.01)

(52) Cooperative Patent Classification (CPC):
**H01M 4/587; H01M 4/13; H01M 4/364;**
**H01M 4/366; H01M 4/386; H01M 4/485;**
**H01M 4/58;** H01M 2004/021; H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **08.11.2023 KR 20230153524**

(71) Applicants:
• **SK On Co., Ltd.**
**Seoul 03161 (KR)**
• **SK Innovation Co., Ltd.**
**Seoul 03188 (KR)**

(72) Inventors:
• **KIM, Hyo Mi**
**34124 Daejeon (KR)**
• **LEE, Hyun Ji**
**34124 Daejeon (KR)**
• **PARK, Sang Won**
**34124 Daejeon (KR)**
• **BANG, Sang In**
**34124 Daejeon (KR)**
• **CHUNG, Da Bin**
**34124 Daejeon (KR)**

(74) Representative: **Prüfer & Partner mbB**
**Patentanwälte · Rechtsanwälte**
**Sohnckestraße 12**
**81479 München (DE)**

(54) **ANODE FOR LITHIUM SECONDARY BATTERY AND LITHIUM SECONDARY BATTERY INCLUDING THE SAME**

(57)    An anode for a lithium secondary battery and a lithium secondary battery including the same are provided. The anode for a lithium secondary battery includes an anode current collector, and an anode active material layer formed on a surface of the anode current collector. A Raman R1 value represented by $I_D/I_G$ and measured on a surface of the anode active material layer is greater than 0.2 and 0.5 or less. The Raman R1 value is measured from a Raman spectrum at a laser focus level of 100% using In Via Raman Microscope from Renishaw as a Raman spectrometer.

FIG. 3

EP 4 553 913 A1

**Description**

TECHINICAL FIELD

The disclosure of this patent application relates to an anode for a lithium secondary battery and a lithium secondary battery including the same. More particularly, the disclosure of this patent application relates to an anode for a lithium secondary battery including a silicon-based and/or a carbon-based active material and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

The lithium secondary battery may include an electrode assembly including repeatedly stacked cathodes and anodes, and an electrolyte solution impregnating the electrode assembly. The lithium secondary battery may further include a case having, e.g., a pouch shape for accommodating the electrode assembly and the electrolyte solution.

Recently, as the lithium secondary battery is applied to a large-capacity battery such as an electric vehicle battery, active materials capable of providing higher capacity are being developed. For example, a silicon-based active material is being applied as an anode active material. However, the silicon-based active material may easily cause shrinkage/expansion due to repeated charge/discharge, thereby deteriorating stability of the battery.

Accordingly, a graphite-based active material may be used together with the silicon-based active material. However, uniform electrochemical properties may not be provided throughout the anode/battery in the manufacture process for the anode/battery.

SUMMARY

According to an aspect of the present disclosure, there is provided an anode for a lithium secondary battery having improved capacity property and stability.

According to an aspect of the present disclosure, there is provided a lithium secondary battery having improved capacity property and stability.

An anode for a lithium secondary battery comprises an anode current collector, and an anode active material layer formed on a surface of the anode current collector. A Raman R1 value represented by Equation 1 and measured on a surface of the anode active material layer is greater than 0.2 and 0.5 or less:

$$[\text{Equation 1}]$$

$$\text{Raman R1} = I_D/I_G$$

In Equation 1, $I_D$ is a peak intensity for an absorption region of 1,330 cm$^{-1}$ to 1,380 cm$^{-1}$ in a Raman spectrum, and $I_G$ is a peak intensity for an absorption region of 1,580 cm$^{-1}$ to 1,600 cm$^{-1}$ in the Raman spectrum. The Raman spectrum is measured at a laser focus level of 100% using In Via Raman Microscope from Renishaw as a Raman spectrometer.

In some embodiments, the Raman R1 value may be in a range from 0.23 to 0.50.

In some embodiments, a Raman R2 value represented by Equation 2 and measured on the surface of the anode active material layer may be in a range from 0.20 to 0.45:

$$[\text{Equation 2}]$$

$$\text{Raman R2} = A_D/A_G$$

In Equation 2, $A_D$ is a peak area for the absorption region of 1,330 cm$^{-1}$ to 1,380 cm$^{-1}$ in the Raman spectrum, and $A_G$ is a peak area for the absorption region of 1,580 cm$^{-1}$ to 1,600 cm$^{-1}$ in the Raman spectrum. The Raman spectrum is measured at the laser focus level of 100% using In Via Raman Microscope from Renishaw as the Raman spectrometer.

In some embodiments, the Raman R2 value may be in a range from 0.22 to 0.40.

In some embodiments, the anode active material layer comprises an anode active material comprising a silicon-based active material and a graphite-based active material.

In some embodiments, the silicon-based active material may comprise a silicon-carbon composite.

In some embodiments, the silicon-carbon composite comprises a carbon core and a silicon coating formed on the carbon core.

In some embodiments, the anode active material layer may comprise the graphite-based active material in a range from 60 wt% to 95 wt%, and the silicon-based active material in a range from 5 wt% to 40 wt%, based on a total weight of the silicon-based active material and the graphite-based active material.

In some embodiments, a Raman R3 value represented by Equation 3 of the silicon-based active material may be in a range from 0.8 to 2.0.

$$[\text{Equation 3}]$$

$$\text{Raman R3} = I_D/I_G$$

In Equation 3, $I_D$ is a peak intensity for an absorption region of 1,330 cm$^{-1}$ to 1,380 cm$^{-1}$ in a Raman spectrum, and $I_G$ is a peak intensity for an absorption region of 1,580 cm$^{-1}$ to 1,600 cm$^{-1}$ in the Raman spectrum. The Raman spectrum is measured at a laser focus level of 0% using In Via Raman Microscope from Renishaw as a Raman spectrometer.

In some embodiments, a Raman R3 value represented by Equation 3 of the graphite-based active material may be in a range from 0.05 to 0.5.

$$[\text{Equation 3}]$$

$$\text{Raman R3} = I_D/I_G$$

In Equation 3, $I_D$ is a peak intensity for an absorption region of 1,330 cm$^{-1}$ to 1,380 cm$^{-1}$ in a Raman spectrum, and $I_G$ is a peak intensity for an absorption region of 1,580 cm$^{-1}$ to 1,600 cm$^{-1}$ in the Raman spectrum. The Raman spectrum is measured at a laser focus level of 0% using In Via Raman Microscope from Renishaw as a Raman spectrometer.

In some embodiments, a Raman R4 value represented by Equation 4 of the silicon-based active material may be in a range from 0.1 to 1.0.

$$[\text{Equation 4}]$$

$$\text{Raman R4} = A_D/A_G$$

In Equation 4, $A_D$ is a peak area for an absorption region of 1,330 cm$^{-1}$ to 1,380 cm$^{-1}$ in a Raman spectrum, and $A_G$ is a peak area for an absorption region of 1,580 cm$^{-1}$ to 1,600 cm$^{-1}$ in the Raman spectrum. The Raman spectrum is measured at a laser focus level of 0% using In Via Raman Microscope from Renishaw as a Raman spectrometer.

In some embodiments, a Raman R4 value represented by Equation 4 of the graphite-based active material may be in a range from 0.05 to 0.5.

$$[\text{Equation 4}]$$

$$\text{Raman R4} = A_D/A_G$$

In Equation 4, $A_D$ is a peak area for an absorption region of 1,330 cm$^{-1}$ to 1,380 cm$^{-1}$ in a Raman spectrum, and $A_G$ is a peak area for an absorption region of 1,580 cm$^{-1}$ to 1,600 cm$^{-1}$ in the Raman spectrum. The Raman spectrum is measured at a laser focus level of 0% using In Via Raman Microscope from Renishaw as a Raman spectrometer.

In some embodiments, the anode active material layer may comprise the anode active material in a range from 85 wt% to 98 wt% based on a total weight of the anode active material layer.

In some embodiments, an electrode density of the anode active material layer may be in a range from 1.3 g/cm$^3$ to 1.8 g/cm$^3$.

A lithium secondary battery may comprise the above-described anode for a lithium secondary battery, and a cathode facing the anode.

In a method of preparing an anode for a lithium secondary battery, an anode mixture is coated on an anode current collector. A magnetic field is applied to the coated anode mixture to perform a magnetic orientation. The magnetically oriented anode mixture is dried. The dried anode mixture is pressed to form an anode active material layer. A Raman R1 value represented by Equation 1 and measured on a surface of the anode active material layer is greater than 0.2 and 0.5 or less.

$$[\text{Equation 1}]$$

$$\text{Raman R1} = I_D/I_G$$

In Equation 1, $I_D$ is a peak intensity for an absorption region of 1,330 cm$^{-1}$ to 1,380 cm$^{-1}$ in a Raman spectrum, and $I_G$ is a peak intensity for an absorption region of 1,580 cm$^{-1}$ to 1,600 cm$^{-1}$ in the Raman spectrum. The Raman spectrum is measured at a laser focus level of 100% using In Via Raman Microscope from Renishaw as a Raman spectrometer.

In some embodiments, a magnetic strength applied in the magnetic orientation may be in a range from 3,000 G to 10,000 G.

In some embodiments, a moving speed of the anode current collector is controlled in a range of 5 m/s to 15 m/s in the drying of the anode mixture.

In some embodiments, a Raman R2 value represented by Equation 2 and measured on the surface of the anode active material layer may be in a range from 0.20 to 0.45:

$$[\text{Equation 2}]$$

$$\text{Raman R2} = A_D/A_G$$

In Equation 2, $A_D$ is a peak area for the absorption region of 1,330 cm$^{-1}$ to 1,380 cm$^{-1}$ in the Raman spectrum, and $A_G$ is a peak area for the absorption region of 1,580 cm$^{-1}$ to 1,600 cm$^{-1}$ in the Raman spectrum. The Raman spectrum is measured at the laser focus level of 100% using In Via Raman Microscope from Renishaw as the Raman spectrometer.

In some embodiments, the anode mixture comprises an anode active material including a silicon-based active material and a graphite-based active material, and a binder. The anode mixture may comprise the anode active material in a range from 85 wt% to 98 wt%, and the binder in a range from 0.5 wt% to 5 wt%, based on a total weight of the anode active material layer.

According to embodiments of the present disclosure, an anode active material layer included in an anode of a lithium secondary battery may have a Raman R1 value ($I_D/I_G$) range measured under a predetermined focus level condition. In the range, side reactions and shrinkage/expansion of a silicon-based active material may be suppressed, and sufficient high-capacity properties may be uniformly implemented throughout the anode active material layer.

In some embodiments, the anode active material layer may have a Raman R2 value ($A_D/A_G$) range measured under the focus level condition. Accordingly, a local activity deviation of the anode active material layer may be suppressed more effectively.

The anode and the lithium secondary battery according to the present disclosure may be widely applied in green technology fields such as an electric vehicle, a battery charging station, a solar power generation, a wind power generation, etc., using a battery, etc. The anode and the lithium secondary battery according to the present disclosure may be used for eco-friendly electric vehicles and hybrid vehicles to prevent a climate change by suppressing air pollution and greenhouse gas emissions.

BRIEF DESCRIPTION OF THE DRAWINGS

FIG. 1 is a schematic cross-sectional view illustrating an anode for a lithium secondary battery in accordance with example embodiments.

FIG. 2 and FIG. 3 are schematic diagrams for describing measurement of Raman R values at a laser focus level 0% and a laser focus level 100%, respectively.

FIG. 4 and FIG. 5 are a schematic plan view and a schematic cross-sectional view, respectively, illustrating a lithium secondary battery in accordance with example embodiments.

## DETAILED DESCRIPTION OF THE EMBODIMENTS

According to embodiments disclosed in the present application, an anode for a lithium secondary battery having a Raman R value in a predetermined range is provided. According to embodiments of the present disclosure, a lithium secondary battery including the anode is also provided.

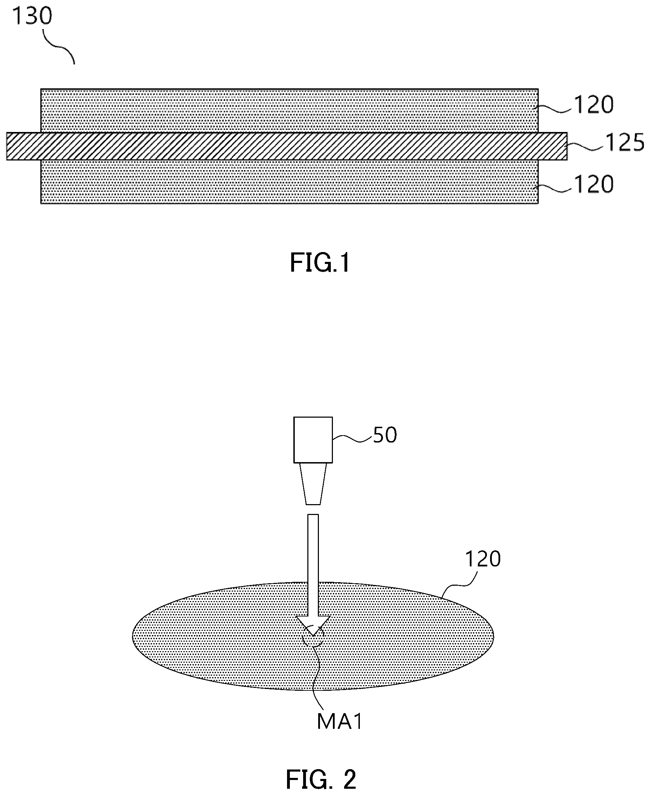

FIG. 1 is a schematic cross-sectional view illustrating an anode for a lithium secondary battery in accordance with example embodiments.

Referring to FIG. 1, an anode 130 for a lithium secondary battery (hereinafter, abbreviated as an anode) includes an anode current collector 125 and an anode active material layer 120.

For example, the anode current collector 125 may include copper, stainless steel, nickel, titanium, or an alloy thereof. In an embodiment, the anode current collector 125 may comprise copper or stainless steel surface-treated with carbon, nickel, titanium, and/or silver.

An anode mixture comprising an anode active material may be coated on the anode current collector 125, dried, and pressed to form the anode active material layer 120. For example, the anode mixture may be prepared by mixing and stirring the anode active material with other components to be included in the anode active material layer, such as an anode binder, a conductive material, and a thickener, in a solvent.

Non-limiting examples of solvents that may be used to prepare an anode active material layer include water, pure water, deionized water, distilled water, ethanol, isopropanol, methanol, acetone, n-propanol, and t-butanol.

In example embodiments, the anode active material may comprise a silicon (Si)-based active material (e.g., a silicon-containing active material) and a carbon-based active material (e.g., a carbon-containing active material substantially devoid of, e.g., containing less than 0.01 wt%, silicon).

The silicon-based anode active material may include Si, $SiO_x$ (wherein 0<x<2), a silicon-carbon composite (Si/C), a silicon oxide (silicate)-carbon composite (SiO/C), a silicon metal (Si-Metal), or the like. In some embodiments, the silicon-based anode active material may include a lithium-silicate compound and may include a lithium-silicate compound containing a dopant such as one or more of magnesium, aluminum, or the like.

In some embodiments, the silicon-based anode active material may comprise a silicon-carbon composite. In some embodiments, the silicon-carbon composite may comprise a carbon core and a silicon coating formed on the carbon core. For example, the carbon core may have a porous structure, and the silicon coating may be formed on the porous carbon structure using any deposition process known to those ordinarily skilled in the art, such as chemical vapor deposition (CVD).

Accordingly, a silicon layer having a large surface area may be achieved to sufficiently implement high-capacity properties of silicon onto the anode. Additionally, the porous carbon structure may support or fix the silicon coating. Accordingly, shrinkage/expansion of the silicon-based anode active material that may occur during repeated charge/-discharge may be suppressed. Thus, the high-capacity properties of the silicon-based anode active material may be sufficiently utilized while alleviating or suppressing mechanical and/or chemical instability of the silicon-based active material.

In some embodiments, the silicon-carbon composite may further comprise an amorphous carbon coating. In this case, the silicon-carbon composite may have a structure comprising a carbon core, a silicon coating and an amorphous carbon coating. The amorphous carbon coating may reduce or suppress side reactions with an electrolyte by reducing an exposed surface of the silicon coating. Accordingly, gas generation due to side reactions may be prevented during repeated charging/discharging, thereby improving operational stability of the battery.

The carbon-based anode active material may include a crystalline carbon or an amorphous carbon. For example, the amorphous carbon may include hard carbon, coke, a mesocarbon microbead (MCMB), and/or a mesophase pitch-based carbon fiber (MPCF). For example, the crystalline carbon may include natural graphite, artificial graphite, a graphitized coke, a graphitized MCMB, and/or a graphitized MPCF.

In example embodiments, crystalline carbon may be used as the carbon-based anode active material. For example, graphite-based active material (natural graphite and/or artificial graphite) may be used. Natural graphite may provide a relatively higher capacity than that of artificial graphite. Artificial graphite may have a relatively higher chemical/physical stability than that of natural graphite.

In some embodiments, natural graphite or artificial graphite may be used as the graphite-based anode active material. In some embodiments, a mixture of natural graphite and artificial graphite may be used as the graphite-based anode active material. In some embodiments, natural graphite and artificial graphite may be mixed at a ratio in a range from 1:9 to 9: 1, from 3:7 to 7:3, or from 4:6 to 6:4 natural graphite:artificial graphite.

In example embodiments, the anode active material may comprise the graphite-based active material in a range of 60 weight percent (wt%) to 95 wt%, and the silicon-based active material (e.g., the silicon-carbon composite) in a range from 5 wt% to 40 wt% based on a total weight of the anode active material. In some embodiments, the anode active material may comprise the graphite-based active material in a range from 75 wt% to 95 wt%, from 77 wt% to 92 wt%, or from 80 wt% to 90 wt%, and the silicon-based active material in a range from 5 wt% to 25 wt%, from 8 wt% to 23 wt%, or from 10 wt% to 20 wt%. In certain embodiments, the anode active material comprises 85 wt% of graphite-based active material and 15 wt% of silicon-carbon composite.

In certain embodiments, the anode active material layer may comprise 0.5 wt% to 5 wt% of binder, based on a total weight of the anode active material layer. In certain embodiments, the anode binder may include one or more of polyvinylidene fluoride (PVDF), vinylidene fluoride-hexafluoropropylene copolymer (poly(vinylidene fluoride-co-hexafluoropropylene)), polyacrylonitrile, polymethylmethacrylate, acrylonitrile butadiene rubber (NBR), polybutadiene rubber (BR), styrene-butadiene rubber (SBR), a polyacrylic acid-based binder, and a poly(3,4-ethylenedioxythiophene, PEDOT)-based binder. In certain embodiments, the anode active material layer may comprise 0.5 wt% to 3 wt% of binder, 0.5 wt% to 2 wt% of binder, or 1 wt% to 2 wt% of binder, based on a total weight of the anode active material layer.

In certain embodiments, the anode active material layer may comprise 0.5 wt% to 5 wt% of a thickener, based on a total weight of the anode active material layer. One example of a suitable thickener that may be used is carboxymethyl cellulose (CMC).

In some embodiments, the anode binder may include a styrene-butadiene rubber (SBR)-based binder, and may be used together with a thickener such as carboxymethyl cellulose (CMC).

In some embodiments, a conductive material may be added to the anode active material layer to enhance conductivity and/or mobility of lithium ions or electrons. Non-limiting examples of suitable conductive materials include carbon-based conductive materials, such as graphite, carbon black, acetylene black, Ketjen black, graphene, carbon nanotubes (e.g., single-wall carbon nanotubes (SWCNT), a vapor-grown carbon fiber (VGCF), a carbon fiber, and/or a metal-based conductive material such as tin, tin oxide, titanium oxide, or a perovskite material, such as $LaSrCoO_3$ and $LaSrMnO_3$. In certain embodiments, the anode active material layer may comprise 0.05 wt% to 10 wt%, of the conductive material. In certain embodiments, the anode active material layer may comprise 0.1 wt% to 10 wt%, of the conductive material. In certain embodiments, the anode active material layer may comprise 0.5 wt% to 10 wt%, of the conductive material.

In some embodiments, the anode active material layer may include an SBR-based binder, carbon nanotubes as a conductive material, and CMC as a thickener.

In certain embodiments, the anode active material layer may comprise anode active material in a range from 85 wt% to 98 wt%, the binder in a range from 0.5 wt% to 5 wt%, the conductive material in a range from 0.5 wt% to 10 wt%, and the thickener in a range from 0.5 wt% to 5 wt%, based on the total weight of the anode active material layer 120. In certain embodiments, the anode active material layer may comprise 1 wt% to 2 wt% of the binder, 0.05 wt% to 1 wt%, of the conductive material, and 1 wt% to 2 wt% of the thickener, based on the total weight of the anode active material layer 120.

In certain embodiments, an electrode density of the anode active material layer 120 may be in a range from 1.3 $g/cm^3$ to 1.8 $g/cm^3$. In some embodiments, the electrode density of the anode active material layer 120 may be in a range from 1.35 $g/cm^3$ to 1.75 $g/cm^3$ or from 1.4 $g/cm^3$ to 1.7 $g/cm^3$. In one embodiment, the anode active material layer has an electrode density of 1.5 $g/cm^3$. The electrode density of the anode active material layer 120 may be calculated by measuring the length, width, and height of the anode active material layer 120 to calculate a volume and dividing the volume by the weight of the anode (not including the weight of the anode current collector).

In the above ranges, a Raman R value range of the anode active material layer 120 described below may be easily achieved.

According to embodiments of the present disclosure, a Raman R1 value, defined by Equation 1, is measured on a surface of the anode active material layer 120.

$$[\text{Equation 1}]$$

$$\text{Raman R1} = I_D/I_G$$

In Equation 1, $I_D$ is a peak intensity for an absorption region (D band) of 1,330 $cm^{-1}$ to 1,380 $cm^{-1}$ in a Raman spectrum, and $I_G$ is a peak intensity for an absorption region (G band) of 1,580 $cm^{-1}$ to 1,600 $cm^{-1}$ in the Raman spectrum.

The Raman spectrum may be measured using any Raman microscope. For example, in certain embodiment, the Raman spectrum is measured using In Via Raman Microscope from Renishaw as a Raman spectrometer under a condition of a laser focus level of 100%. In certain embodiments, the Raman spectrum is measured using a laser wavelength of 532 nm, a magnification of x20, a laser power of 100%, 12 mV, and a laser exposure time of 10 seconds. In certain embodiments, a Raman measurement can be performed three times and an average value thereof may be adopted as the Raman R1 value of the corresponding anode active material layer.

In certain embodiments, the Raman R1 value is measured on an upper surface of the anode active material layer 120 opposite from the contact surface of the anode active material layer 120 with the anode current collector 125. The Raman R1 value of the anode active material layer incorporated into an anode of a secondary battery, as disclosed herein, is greater than 0.2 and 0.5 or less.

In some embodiments, the Raman R1 value of the anode active material layer 120 may be in a range from 0.21 to 0.50, from 0.22 to 0.50, or from 0.23 to 0.50. In an embodiment, the Raman R1 value of the anode active material layer 120 may be in a range from 0.25 to 0.50, from 0.26 to 0.50, or from 0.30 to 0.49. In the above ranges, the capacity properties and mechanical stability of the anode may be further improved while maintaining the appropriate amorphous properties of the anode active material.

When fabricating an anode active material layer having the above-described Raman R1 value range, particle damages caused by shrinkage and expansion of silicon-based particles and side reactions with electrolyte during repeated charge and discharge may be effectively suppressed thereby improving capacity retention and life-span properties of the secondary battery. Additionally, sufficient capacity properties may be implemented from the introduction of silicon-based active material while preventing a resistance increase due to an excessive increase in amorphous properties of the anode active material.

In some embodiments, a Raman R2 value, defined by Equation 2, may be measured, using the Raman spectroscopy analysis conditions described above, on a surface of the anode active material layer 120.

$$[\text{Equation 2}]$$

$$\text{Raman R2} = A_D/A_G$$

In Equation 2, $A_D$ is an area of the peak for the absorption region (D band) of 1,330 cm$^{-1}$ to 1,380 cm$^{-1}$ in the Raman spectrum, and $A_G$ is an area of the peak for the absorption region (G band) of 1,580 cm$^{-1}$ to 1,600 cm$^{-1}$ in the Raman spectrum.

In some embodiments, the Raman R1 value of the anode active material layer 120 may be 0.20 to 0.45. When both Raman R1 and Raman R2 values, as described according to any embodiment disclosed herein, are satisfied, improved anode capacity characteristic and stability through the above-described Raman R1 value control may be implemented with high reliability. Uniformity of the Raman spectral properties throughout the anode active material layer 120 may be additionally enhanced by controlling the above Raman R2 value.

In some embodiments, the Raman R2 value of the anode active material layer 120 may be in a range from 0.20 to 0.40, from 0.21 to 0.40, or from 0.22 to 0.40. In an embodiment, the Raman R2 value of the anode active material layer 120 may be in a range from 0.23 to 0.40, or from 0.25 to 0.39. In the above ranges, uniformity of the Raman properties throughout an entire region of the anode active material layer 120 may be further enhanced while maintaining the beneficial effect from the above Raman R1 value ranges.

As described above, the Raman R1 and R2 values may be measured under the condition of the laser focus level of 100% of the Raman spectrometer. The laser focus level of 100% refers to a level at which a measurement area of a single shot or a single scan of the Raman spectrometer is set to a maximum value whereas a laser focus level of 0% refers to a level at which the measurement area of a single shot or single scan of the Raman spectrometer is set to a minimum value.

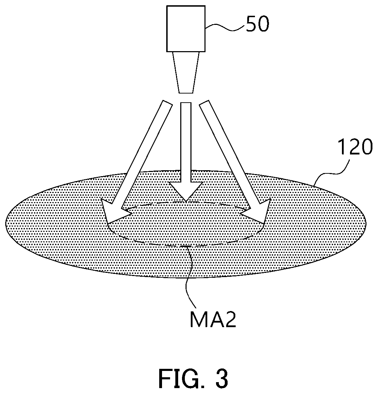

FIG. 2 and FIG. 3 are schematic views for describing measurement of Raman R values at a laser focus level 0% and a laser focus level 100%, respectively.

Referring to FIG. 2, when the laser focus level of a Raman spectrometer 50 is 0%, a minimum area MA1 capable of being measured on the surface of the anode active material layer 120 is set. In this case, a signal intensity obtained in the minimum area MA1 increases, and properties in a local area may be measured more precisely with high reliability. However, if a distribution of the anode active material within the anode active material layer 120 is not uniform, a deviation in measured values may occur depending on a selected area. Additionally, properties of the selected area may only be reflected, and properties of the entire area of the anode active material layer 120 may not be reflected. For example, when a large amount of the conductive material and the binder is locally included in the minimum area MA1, a signal from the active material may be fluctuated or disturbed by components of the conductive material and binder.

Referring to FIG. 3, when the laser focus level of the Raman spectrometer 50 is 100% according to the embodiments of the present disclosure, a maximum area (MA2) capable of being measured on the surface of the anode active material layer 120 is set. Thus, components and amounts of the anode active material layer 120 included in a measurable area increase, and a Raman value reflecting compositional properties of the entire area of the anode active material layer 120 may be obtained.

Accordingly, the above-described Raman R1 and R2 values may reflect uniformity of amorphous/crystalline properties, distribution of the silicon-based active material, and expansion stability over the entire area of the anode active material layer 120.

Thus, the Raman R1 and R2 values may be adjusted within the above-described range, so that capacity enhancement through the introduction of the silicon-based active material and mechanical/chemical stability enhancement through the suppression of expansion may be achieved/confirmed over the entire area of the anode active material layer 120.

The above-described Raman R1 and R2 values may vary, e.g., depending on the constituent materials of the anode active material, the constituent materials of the conductive agent/binder, and may also vary depending on formation conditions of the anode active material layer 120.

In example embodiments, even when the same anode mixture is used, different Raman R1/R2 values may be generated depending on the stirring speed of the anode mixture, type/amount of solvent, the viscosity of the anode mixture, the coating speed of the anode mixture, the drying speed after coating, the drying temperature, and other drying conditions such as humidity.

For example, the viscosity and the drying speed of the anode mixture may be controlled to control the Raman R1 and R2 values within the ranges described above. In a non-limiting example, the viscosity of the anode mixture at room temperature (at 25°C) may be in a range from 1,000 cp to 5,000 cp, from 2,000 cp to 5,000 cp, or from 3,000 cp to 4,000 cp. In a non-limiting example, the drying speed (the moving speed of the anode current collector coated with the anode mixture in the drying apparatus) may be in a range from 5 m/s to 15 m/s, from 5 m/s to 10 m/s, from 6 m/s to 10 m/s, or from 7 m/s to 10 m/s. In certain embodiments, the drying speed is 8 m/s.

In an embodiment, a magnetic orientation may be performed before the drying of the anode mixture, which may aid in finely controlling the Raman R1 and R2 values. In a non-limiting example, a magnetic strength applied in the magnetic orientation may be in a range from 3,000 G to 10,000 G, from 4,000 G to 10,000 G, or from 5,000 G to 9,000 G. In one embodiment, a magnetic strength of 7,000 G to 9,000 G, such as 8,000 G is applied before the drying of the anode mixture.

In some embodiments, the silicon-based active material or the silicon-carbon composite included in the anode active material may be further characterized by a Raman R3 value, defined by Equation 3.

$$[\text{Equation 3}]$$

$$\text{Raman R3} = I_D/I_G$$

In Equation 3, $I_D$ is a peak intensity for an absorption region of 1,330 cm$^{-1}$ to 1,380 cm$^{-1}$ in a Raman spectrum measured at a laser focus level of 0% of Renishaw's In Via Raman Microscope as a Raman spectrometer. $I_G$ is a peak intensity for an absorption region of 1,580 cm$^{-1}$ to 1,600 cm$^{-1}$ in the Raman spectrum. The Raman R3 value may reflect an inherent or specific Raman $I_D/I_G$ value of the anode active material. In one embodiment, the Raman R3 value of the silicon-based active material or the silicon-carbon composite included in the anode active material may be in a range of 0.8 to 2.0. For example, the Raman R3 value of the silicon-carbon composite may be in a range from 0.8 to 1.5, from 0.8 to 1.4, from 0.8 to 1.3, from 0.8 to 1.2, from 0.8 to 1.1, or from 0.8 to 1.0.

In some embodiments, the graphite-based active material included in the anode active material may be further characterized by a Raman R3 value, according to Equation 3, in a range of 0.05 to 0.5. For example, the Raman R3 value of the graphite-based active material may be in a range from 0.05 to 0.4, from 0.05 to 0.3, from 0.05 to 0.2, or from 0.05 to 0.15.

In some embodiments, the silicon-based active material or the silicon-carbon composite included in the anode active material may be further characterized by a Raman R4 value, defined by Equation 4.

$$[\text{Equation 4}]$$

$$\text{Raman R}_4 = A_D/A_G$$

In Equation 4, $A_D$ is a peak area for an absorption region of 1,330 cm$^{-1}$ to 1,380 cm$^{-1}$ in a Raman spectrum measured at a laser focus level of 0% of an In Via Raman Microscope from Renishaw as a Raman spectrometer, and $A_G$ is a peak area for an absorption region of 1,580 cm$^{-1}$ to 1,600 cm$^{-1}$ in the Raman spectrum. The Raman R4 value may reflect an inherent or specific Raman $A_D/A_G$ value of the anode active material.

In one embodiment, the Raman R4 value of the silicon-based active material or the silicon-carbon composite may be in a range from 0.1 to 1.0. For example, the Raman R4 value of the silicon-carbon composite may be in a range from 0.2 to 0.9, from 0.3 to 0.9, from 0.3 to 0.8, from 0.3 to 0.7, or from 0.3 to 0.6.

In one embodiment, the Raman R4 value of the graphite-based active material included in the anode active material may be in a range of 0.05 to 0.5. For example, the Raman R4 value of the graphite-based active material may be in a range from 0.05 to 0.4, from 0.05 to 0.3, from 0.05 to 0.2, or from 0.05 to 0.15.

The inherent Raman values of the above-described active material may be values measured at a laser focus level of 0% of the Raman spectrometer.

Without wishing to be bound by theory, it is believed that when an active material having the inherent Raman value range as described above is used, the above-described Raman R1 and R2 value ranges at the laser focus level of 100% may be more easily obtained.

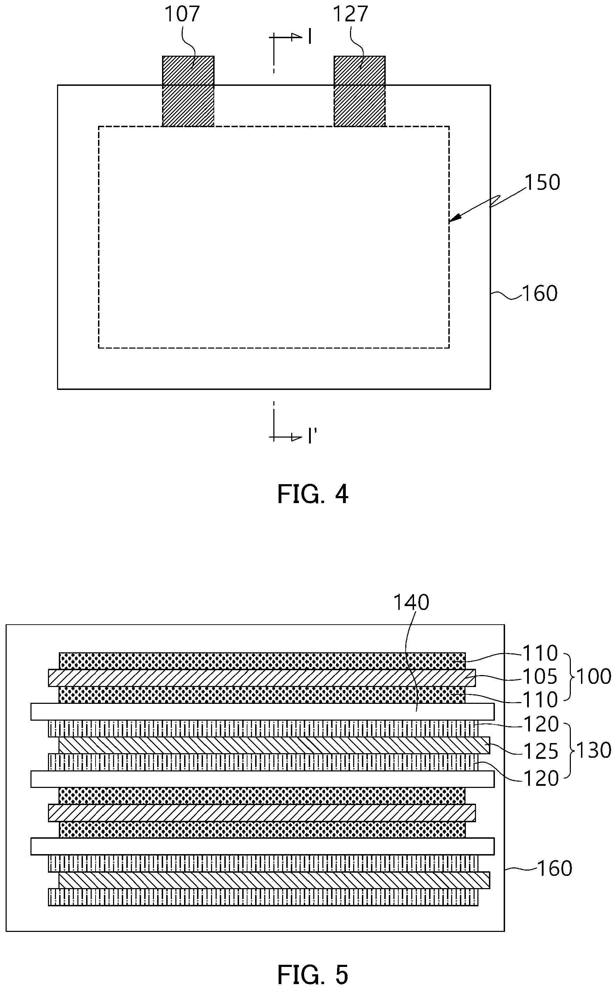

FIG. 4 and FIG. 5 are a schematic plan view and a schematic cross-sectional view, respectively, illustrating a lithium secondary battery in accordance with example embodiments. For example, FIG. 5 is a cross-sectional view taken along a line I-I' of FIG. 4 in a thickness direction.

In FIGS. 4 and 5, the lithium secondary battery includes an anode 130 which includes an anode active material layer 120 and an anode current collector 125 as described above, and a cathode 100. The lithium secondary battery may further include a separator 140 interposed between the cathode 100 and the anode 130.

In some embodiments, the cathode 100 may include a cathode active material layer 110 formed by coating a cathode active material on a cathode current collector 105. In certain embodiment, the cathode active material may comprise a compound capable of reversibly intercalating and de-intercalating lithium ions.

The cathode current collector 105 may comprise stainless steel, nickel, aluminum, titanium, or an alloy thereof. For example, the cathode current collector 105 may comprise aluminum or stainless steel surface-treated with one or more of carbon, nickel, titanium, silver, or the like.

In example embodiments, the cathode active material may comprise a lithium-nickel metal oxide. In certain embodiments, the lithium-nickel metal oxide may further include at least one of cobalt (Co), manganese (Mn) and aluminum (Al).

In some embodiments, the cathode active material or the lithium-nickel metal oxide may include a layered structure, or a crystal structure represented by Chemical Formula 1.

[Chemical Formula 1] $\quad Li_xNi_aM_bO_{2+z}$

In Chemical Formula 1, $0.9 \leq x \leq 1.5$, $0.6 \leq a \leq 0.99$, $0.01 \leq b \leq 0.4$, and $-0.5 \leq z \leq 0.1$. As described above, M may include Co, Mn and/or Al.

The chemical structure represented by Chemical Formula 1 represents a bonding relationship included in the layered structure or the crystal structure of the cathode active material and does not exclude other additional elements. For example, M may include Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In one embodiment, the cathode active material may further comprise one or more auxiliary elements to enhance the chemical stability of the cathode active material or the layered structure/crystal structure. The auxiliary element may be incorporated into the layered structure/crystal structure to form a bond, and also, in this case, is to be understood that the auxiliary element is also included within the chemical structure range represented by Chemical Formula 1.

The auxiliary element may include, e.g., at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element, e.g., Al, may act as an auxiliary active element that contributes to capacity/power activity of the cathode active material together with Co or Mn.

For example, the cathode active material or the lithium-nickel metal oxide particle may include a layered structure or a crystal structure represented by Chemical Formula 1-1 below.

[Chemical Formula 1-1] $\quad Li_xNi_aM1_{b1}M2_{b2}O_{2+z}$

In Chemical Formula 1-1, M1 may include Co, Mn and/or Al. M2 may include the above-described auxiliary element. In Chemical Formula 1-1, $0.9 \leq x \leq 1.2$, $0.6 \leq a \leq 0.99$, $0.01 \leq b1+b2 \leq 0.5$, and $-0.5 \leq z \leq 0.1$.

The cathode active material above may further include a coating element or a doping element. For example, elements substantially the same as or similar to the above-described auxiliary elements may be used as the coating element or the doping element. For example, the above-described elements may be used alone or in a combination of two or more therefrom as the coating element or the doping element.

The doping element of the coating element may be present on a surface of the lithium-transition metal oxide particle, or may penetrate through the surface of the lithium-transition metal oxide particle to be included in the bonding structure represented by Chemical Formula 1 or Chemical Formula 1-1.

The cathode active material may include a nickel-cobalt-manganese (NCM)-based lithium oxide. In certain embodiments, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, in certain embodiments, life-span stability and capacity retention properties may be improved using Mn while maintaining an electrical conductivity by Co.

The content of Ni in the NCM-based lithium oxide (e.g., a mole fraction of nickel based on the total number of moles of nickel, cobalt, and manganese) may be 0.6 or more, 0.7 or more, or 0.8 or more. In some embodiments, the content of Ni may be in a range from 0.8 to 0.95, from 0.82 to 0.95, from 0.83 to 0.95, from 0.84 to 0.95, from 0.85 to 0.95, or from 0.88 to 0.95.

In some embodiments, the cathode active material may include a lithium cobalt oxide-based active material, a lithium manganese oxide-based active material, a lithium nickel oxide-based active material, or a lithium iron phosphate (LFP) active material (e.g., $LiFePO_4$).

In some embodiments, the cathode active material may include, e.g., a Mn-rich active material, a Li-rich layered oxide (LLO)/OLO (Over-Lithiated Oxide)-based active material, or a Co-less-based active material, which may have a chemical structure or a crystal structure represented by Chemical Formula 2 below.

[Chemical Formula 2] $\qquad$ $p[Li_2MnO_3] \cdot (1-p)[Li_qJO_2]$

In Chemical Formula 2, $0 < p < 1, 0.9 \leq q \leq 1.2$, and J may include at least one element selected from the group consisting of Mn, Ni, Co, Fe, Cr, V, Cu, Zn, Ti, Al, Mg and B.

A cathode slurry may be prepared, e.g., by mixing the cathode active material in a solvent. The cathode slurry may be coated on the cathode current collector 105, and then dried and pressed to prepare the cathode active material layer 110.

The cathode active material layer 110 may further include a binder, and may optionally further include a conductive material and/or a thickener, as described above with regard to the anode active material layer.

Materials substantially the same as or similar to the binder, thickener, and conductive material described above with regard to the anode may be used in the cathode active material layer. In some embodiments, a PVDF-based binder may be used as the cathode binder.

In one embodiment, the separator 140 may include a porous substrate, such as a polymer film or a porous non-woven fabric. The porous polymer film may include one or more of a polyolefin-based polymer such as an ethylene polymer, a propylene polymer, an ethylene/butene copolymer, an ethylene/hexene copolymer, and an ethylene/methacrylate copolymer. The porous non-woven fabric may include one or more of a high melting point glass fiber, a polyethylene terephthalate fiber, or the like.

In certain embodiments, the separator 140 may include a ceramic-based material. For example, inorganic particles comprising a ceramic-based material, may be coated on the polymer film or dispersed in the polymer film to improve a heat resistance.

In example embodiments, an electrode cell may be defined by the cathode 100, the anode 130 and the separator 140, and a plurality of the electrode cells may be stacked to form an electrode assembly 150 having, e.g., a jelly roll shape. For example, the electrode assembly 150 may be formed by winding, stacking, z-folding, or stack-folding of the separator 140.

The electrode assembly 150 may be accommodated together with an electrolyte solution in a case 160 to define the lithium secondary battery. In an exemplary embodiment, a non-aqueous electrolyte solution may be used as the electrolyte solution.

In one embodiment, the non-aqueous electrolyte solution may comprise a lithium salt as an electrolyte and an organic solvent. The lithium salt may be represented by, e.g., $Li^+X^-$, wherein anion $X^-$ is, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CF_3CO_2^-$, $CH_3CO_2^-$, $SCN^-$, or $(CF_3CF_2SO_2)_2N^-$.

In one embodiment, the organic solvent may include propylene carbonate (PC), ethylene carbonate (EC), diethyl carbonate (DEC), dimethyl carbonate (DMC), ethyl methyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more therefrom.

In some embodiments, a solid electrolyte may be used instead of the non-aqueous electrolyte solution described above. In this case, the lithium secondary battery may be fabricated in the form of an all-solid-state battery. Additionally, a solid electrolyte layer may be disposed between the cathode 100 and the anode 130 instead of the above-described separator 140.

In certain embodiments, the solid electrolyte may include a sulfide-based electrolyte. Non-limiting examples of the sulfide-based electrolyte include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z is Ge, Zn or Ga), $Li_2S-GeS_2$, $Li_2S-SiS_2-Li_3PO_4$, $Li_2S-SiS_2-Li_pMO_q$, (p and q are positive numbers, M is P, Si, Ge, B, Al, Ga or In), $Li_7-xPS_6-xCl_x$ ($0 \leq x \leq 2$), $Li_7-xPS_6-xBr_x$ ($0 \leq x \leq 2$), $Li_7-xPS_6-xI_x$ ($0 \leq x \leq 2$), etc. These may be used alone or in a combination thereof.

In one embodiment, the solid electrolyte may include, e.g., an oxide-based amorphous solid electrolyte such as $Li_2O-B_2O_3-P_2O_5$, $Li_2O-SiO_2$, $Li_2O-B_2O_3$, or $Li_2O-B_2O_3-ZnO$.

As illustrated in FIG. 4, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

In FIG. 4, the cathode lead 107 and the anode lead 127 are illustrated as protruding from an upper side of the case 160 in a plan view, but the positions of the electrode leads are not limited as illustrated in FIG. 4. For example, the electrode leads may protrude from at least one of both lateral sides of the case 160, and may also protrude from a lower side of the case 160. Alternatively, the cathode lead 107 and the anode lead 127 may be formed to protrude from different sides of the case 160.

The lithium secondary battery may be manufactured in, e.g., a cylindrical shape using a can, a prismatic shape, a pouch shape, or a coin shape.

EXAMPLES

Example 1

Fabrication of anode

A silicon-carbon composite (hereinafter, referred to as a Si/C) having a Raman R3 value defined by Equation 3 of 0.99 and a Raman R4 value defined by Equation 4 of 0.5 measured at a laser focus level of 0%, and a graphite having a Raman R3 value defined by Equation 3 of 0.11 and a Raman R4 value defined by Equation 4 of 0.11 at a laser focus level of 0% were prepared.

A mixture of the graphite and the Si/C in a weight ratio of 85:15 as anode active material, a conductive material (SWCNT), CMC as a thickener, and SBR as a binder were mixed in a weight ratio of 97.2:0.1:1.2:1.5, and dispersed in water to prepare an anode mixture in the form of a slurry. The viscosity of the anode mixture was 4,000 cp (25°C).

The prepared anode mixture was coated on upper and lower surfaces of an anode current collector (a Cu foil) having a thickness of 180 $\mu$m. Thereafter, the anode current collector was dried by being passed through an 80 °C drying apparatus at a speed of 8 m/s.

A neodymium magnet was installed in the drying apparatus to apply a magnetic force to the upper and lower surfaces of the anode current collector. A magnetic field having a magnetic force line direction perpendicular to the anode current collector was applied with a maximum magnetic force of 8,000 G for 2 seconds by the magnet before performing the drying.

Thereafter, the above-mentioned anode mixture was pressed to obtain an anode including an anode active material layer having an electrode density of 1.5 g/cm$^3$.

Manufacture of secondary battery

A slurry including an NCM-based active material (a Li-transition metal oxide) was coated and dried on an aluminum foil to prepare a cathode. A polyolefin separator was interposed between the cathode and the anode prepared as described above to manufacture a secondary battery cell. The secondary battery cell was accommodated in a pouch, and then a 1M LiPF$_6$ solution using a mixed solvent of ethylene carbonate (EC) and diethyl carbonate (DEC) was injected as an electrolyte and sealed to manufacture a pouch-type lithium secondary battery.

Thereafter, pre-charging was performed for 20% of a total capacity at a current corresponding to 0.25C. Degassing was performed, aging was performed for more than 24 hours, and then formation charge and discharge were performed (charge condition CC-CV 0.65C 4.2V 0.05C CUT-OFF, discharge condition CC 0.65C 2.5V CUT-OFF).

Example 2

An anode and a secondary battery were manufactured by the same method as that in Example 1, except that the weight ratio of the graphite and Si/C was changed to 80:20.

Example 3

An anode and a secondary battery were manufactured by the same method as that in Example 1, except that the electrode density of the anode active material layer was changed to 1.6 g/cm$^3$.

Example 4

An anode and a secondary battery were manufactured by the same method as that in Example 1, except that a graphite having a Raman R3 value defined by Equation 3 of 0.28 and a Raman R4 value defined by Equation 4 of 0.29 measured at a focus level of 0% was used.

Example 5

An anode and a secondary battery were manufactured by the same method as that in Example 1, except that a Si/C having a Raman R3 value defined by Equation 3 of 1.02 and a Raman R4 value defined by Equation 4 of 0.7 measured at a focus level of 0% was used.

Comparative Example 1

An anode and a secondary battery were manufactured by the same method as that in Example 1, except that the maximum magnetic force of the magnetic field applied in the drying apparatus was changed to 2,000 G.

Comparative Example 2

An anode and a secondary battery were manufactured by the same method as that in Example 1, except that the speed of the anode collector in the drying apparatus was changed to 12 m/s.

Comparative Example 3

An anode and a secondary battery were manufactured by the same method as that in Example 1, except that the drying temperature was changed to 100°C.

Comparative Example 4

An anode and a secondary battery were manufactured by the same method as that in Example 1, except that the viscosity of the anode mixture was adjusted to 6,000 cp.

Experimental Example 1

(1) Measurement of Raman R value

The Raman R1 and R2 values defined by Equations 1 and 2 were measured from a surface of the anode active material layer under the conditions below. Specifically, three areas on the surface of the anode active material layer were selected, and the Raman R1 and R2 values were obtained as an average of the corresponding values.

    i) Raman spectrometer: In Via Raman Microscope, Renishaw (UK)
    ii) Laser focus level: 100%
    ii) Argon ion laser wavelength: 532 nm
    iii) Exposure time: 10 s, mapping count: 10 times
    iv) Magnification: x20
    v) Laser power: 100%, 12 mV

(2) Measurement of normal life-span capacity retention

A charge (CCCV, SOC98, 0.05C cut-off) and a discharge (CC, SOC4 cut-off) at 25°C as a single cycle, and 1,000 cycles of the charge/discharge were repeated.
A capacity efficiency was measured by expressing a discharge capacity after the 1000 cycles as a percentage relative to a discharge capacity after the 1st cycle.

(3) Evaluation of rapid charge life-span property

The secondary battery sample was charged for 25 minutes in a range of SOC 10-82% at 25°C, and discharged at 0.3C. The above cycle was repeated 150 times. A discharge capacity retention after the 150 cycles was measured as a percentage relative to an initial discharge capacity at the 1st cycle.
The evaluation results are also shown in Table 1 below.

[Table 1]

| | Raman R1 value $(I_D/I_G)$ | Raman R2 value $(A_D/A_G)$ | capacity retention (%) | rapid charge life-span retention (%) |
|---|---|---|---|---|
| Example 1 | 0.48 | 0.37 | 93.9 | 96.5 |
| Example 2 | 0.44 | 0.35 | 92.5 | 89.3 |
| Example 3 | 0.48 | 0.36 | 91.9 | 88.8 |
| Example 4 | 0.43 | 0.38 | 94.3 | 98.2 |
| Example 5 | 0.25 | 0.23 | 90.4 | 86.2 |
| Comparative Example 1 | 0.20 | 0.21 | 84.7 | 80.5 |
| Comparative Example 2 | 0.18 | 0.17 | 82.6 | 74.1 |
| Comparative Example 3 | 0.56 | 0.41 | 83.2 | 76.8 |
| Comparative Example 4 | 0.58 | 0.43 | 79.1 | 71.7 |

Referring to Table 1, in Examples satisfying the above-described Raman R1 and R2 value ranges, improved normal capacity retentions and rapid charge capacity retentions were obtained.

Experimental Example 1

Comparison of Raman R values at 0% laser focus level

Raman R3 and Raman R4 values at 0% laser focus level of a Raman spectrometer were measured for the anode active material layers of Examples 1 and 2.

    i) Raman spectrometer: In Via Raman Microscope, Renishaw (UK)
    ii) Laser focus level: 0%
    ii) Argon ion laser wavelength: 532 nm
    iii) Exposure time: 10 seconds, mapping count: 30 times
    iv) Magnification: x50
    v) Laser power: 10%, 0.69 mV

Comparative Example 5

An anode was manufactured by the same method as that in Example 1 except that the weight ratio of graphite and Si/C was changed to 50:50.

Comparative Example 6

An anode was manufactured by the same method as that in Example 1, except that the weight ratio of graphite and Si/C was changed to 97:3.
Raman R1 and Raman R2 values at a laser focus level of 100% and the Raman R3 and Raman R4 values at a laser focus level of 0% were measured for the anode active material layers of Comparative Examples 5 and 6.
The measurement results are shown in Table 2 below.

[Table 2]

| | Focus level 100% Raman R1 value $(I_D/I_G)$ | Focus level 100% Raman R2 value $(A_D/A_G)$ | Focus level 0% Raman R3 value $(I_D/I_G)$ | Focus level 0% Raman R4value $(A_D/A_G)$ |
|---|---|---|---|---|
| Example 1 | 0.48 | 0.37 | 0.22 | 0.23 |
| Example 2 | 0.44 | 0.35 | 0.18 | 0.18 |
| Comparative Example 5 | 0.20 | 0.19 | 0.24 | 0.25 |
| Comparative Example 6 | 0.57 | 0.54 | 0.48 | 0.39 |

Referring to Table 2, it was confirmed that the Raman values at the focus level 0% in Examples 1 and 2 were different from the Raman R values at the focus level 100%. Referring to Comparative Examples 5 and 6, it was confirmed that the Raman values at the focus level 100% may deviate from the range of embodiments of the present disclosure even when the Raman values at the focus level 0% were partially within the range of embodiments of the present disclosure.

**Claims**

1. An anode for a lithium secondary battery, comprising:

    an anode current collector; and
    an anode active material layer formed on a surface of the anode current collector,
    wherein a Raman R1 value represented by Equation 1 and measured on a surface of the anode active material layer is greater than 0.2 and 0.5 or less:

$$[\text{Equation 1}]$$

$$\text{Raman R1} = I_D/I_G$$

    wherein, in Equation 1, $I_D$ is a peak intensity for an absorption region of 1,330 cm$^{-1}$ to 1,380 cm$^{-1}$ in a Raman spectrum, and $I_G$ is a peak intensity for an absorption region of 1,580 cm$^{-1}$ to 1,600 cm$^{-1}$ in the Raman spectrum, and
    the Raman spectrum is measured at a laser focus level of 100% using In Via Raman Microscope from Renishaw as a Raman spectrometer.

2. The anode for a lithium secondary battery according to claim 1, wherein the Raman R1 value is in a range from 0.23 to 0.50.

3. The anode for a lithium secondary battery according to any one claims 1 and 2, wherein a Raman R2 value represented by Equation 2 and measured on the surface of the anode active material layer is in a range from 0.20 to 0.45:

$$[\text{Equation 2}]$$

$$\text{Raman R2} = A_D/A_G$$

    wherein, in Equation 2, $A_D$ is a peak area for the absorption region of 1,330 cm$^{-1}$ to 1,380 cm$^{-1}$ in the Raman spectrum, and $A_G$ is a peak area for the absorption region of 1,580 cm$^{-1}$ to 1,600 cm$^{-1}$ in the Raman spectrum, and
    the Raman spectrum is measured at the laser focus level of 100% using In Via Raman Microscope from Renishaw as the Raman spectrometer.

4. The anode for a lithium secondary battery according to claim 3, wherein the Raman R2 value is in a range from 0.22 to 0.40.

5. The anode for a lithium secondary battery according to any one of claims 1 to 4, wherein the anode active material layer comprises an anode active material comprising a silicon-based active material and a graphite-based active material.

6. The anode for a lithium secondary battery according to claim 5, wherein the silicon-based active material comprises a silicon-carbon composite.

7. The anode for a lithium secondary battery according to claim 6, wherein the silicon-carbon composite comprises a carbon core and a silicon coating formed on the carbon core.

8. The anode for a lithium secondary battery according to any one of claims 5 to 7, wherein the anode active material layer comprises from 60 wt% to 95 wt% of the graphite-based active material and from 5 wt% to 40 wt% of the silicon-based active material, based on a total weight of the silicon-based active material and the graphite-based active material.

9. The anode for a lithium secondary battery according to any one of claims 5 to 8, wherein a Raman R3 value represented by Equation 3 of the silicon-based active material is in a range from 0.8 to 2.0:

$$[\text{Equation 3}]$$

$$\text{Raman R3} = I_D/I_G$$

wherein, in Equation 3, $I_D$ is a peak intensity for an absorption region of 1,330 $cm^{-1}$ to 1,380 $cm^{-1}$ in a Raman spectrum, and $I_G$ is a peak intensity for an absorption region of 1,580 $cm^{-1}$ to 1,600 $cm^{-1}$ in the Raman spectrum, and
the Raman spectrum is measured at a laser focus level of 0% using In Via Raman Microscope from Renishaw as a Raman spectrometer.

10. The anode for a lithium secondary battery according to any one of claims 5 to 9, wherein a Raman R3 value represented by Equation 3 of the graphite-based active material is in a range from 0.05 to 0.5:

$$[\text{Equation 3}]$$

$$\text{Raman R3} = I_D/I_G$$

wherein, in Equation 3, $I_D$ is a peak intensity for an absorption region of 1,330 $cm^{-1}$ to 1,380 $cm^{-1}$ in a Raman spectrum, and $I_G$ is a peak intensity for an absorption region of 1,580 $cm^{-1}$ to 1,600 $cm^{-1}$ in the Raman spectrum, and
the Raman spectrum is measured at a laser focus level of 0% using In Via Raman Microscope from Renishaw as a Raman spectrometer.

11. The anode for a lithium secondary battery according to any one of claims 5 to 10, wherein a Raman R4 value represented by Equation 4 of the silicon-based active material is in a range from 0.1 to 1.0:

$$[\text{Equation 4}]$$

$$\text{Raman R4} = A_D/A_G$$

wherein, in Equation 4, $A_D$ is a peak area for an absorption region of 1,330 $cm^{-1}$ to 1,380 $cm^{-1}$ in a Raman spectrum, and $A_G$ is a peak area for an absorption region of 1,580 $cm^{-1}$ to 1,600 $cm^{-1}$ in the Raman spectrum, and
the Raman spectrum is measured at a laser focus level of 0% using In Via Raman Microscope from Renishaw as a Raman spectrometer.

12. The anode for a lithium secondary battery according to any one of claims 5 to 11, wherein a Raman R4 value represented by Equation 4 of the graphite-based active material is in a range from 0.05 to 0.5:

$$[\text{Equation 4}]$$

$$\text{Raman R4} = A_D/A_G$$

wherein, in Equation 4, $A_D$ is a peak area for an absorption region of 1,330 $cm^{-1}$ to 1,380 $cm^{-1}$ in a Raman spectrum, and $A_G$ is a peak area for an absorption region of 1,580 $cm^{-1}$ to 1,600 $cm^{-1}$ in the Raman spectrum, and
the Raman spectrum is measured at a laser focus level of 0% using In Via Raman Microscope from Renishaw as a Raman spectrometer.

13. The anode for a lithium secondary battery according to any one claims 5 to 12, wherein the anode active material layer comprises from 85 wt% to 98 wt% of the anode active material based on a total weight of the anode active material layer.

14. The anode for a lithium secondary battery according to any one of claims 1 to 13, wherein the anode active material layer has an electrode density in a range from 1.3 g/cm$^3$ to 1.8 g/cm$^3$.

15. A lithium secondary battery, comprising:

the anode for a lithium secondary battery according to any one of claims 1 to 14; and
a cathode facing the anode.

130

120

125

120

FIG.1

50

120

MA1

FIG. 2

FIG. 3

107    127

I

150

160

FIG. 4

140

110
105  100
110

120
125  130
120

160

FIG. 5

Europäisches
Patentamt

European
Patent Office

Office européen
des brevets

# EUROPEAN SEARCH REPORT

**Application Number**

EP 24 21 0733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 131 484 A1 (NINGDE AMPEREX TECHNOLOGY LTD [CN]) 8 February 2023 (2023-02-08)<br>* tables 3,4,7 *<br>* claims 1-10 *<br>* paragraphs [0029], [0036] *<br>- - - - - | 1-15 | INV.<br>H01M4/13<br>H01M4/36<br>H01M4/38<br>H01M4/485<br>H01M4/587 |
| X | US 2022/123289 A1 (BAE JI HEE [KR] ET AL) 21 April 2022 (2022-04-21)<br>* claims 1-10 *<br>* paragraphs [0110] - [0121]; table 1 *<br>- - - - - | 1,5,8, 13-15 | H01M4/58<br><br>ADD.<br>H01M4/02 |
| X | US 2014/349180 A1 (KIM BEOM-KWON [KR] ET AL) 27 November 2014 (2014-11-27)<br>* claims 1-18 *<br>* paragraphs [0044] - [0045] *<br>* table 3 *<br>- - - - - | 1,5,6,8, 15 | |
| X | EP 3 133 678 A1 (SHOWA DENKO KK [JP]; UMICORE NV [BE])<br>22 February 2017 (2017-02-22)<br>* claims 1-15 *<br>* paragraphs [0027], [0028] *<br>- - - - - | 1,8,15 | |

**TECHNICAL FIELDS SEARCHED (IPC)**

H01M

The present search report has been drawn up for all claims

| Place of search | Date of completion of the search | Examiner |
|---|---|---|
| Munich | 16 March 2025 | Haering, Christian |

EPO FORM 1503 03.82 (P04C01)

**ANNEX TO THE EUROPEAN SEARCH REPORT
ON EUROPEAN PATENT APPLICATION NO.**

EP 24 21 0733

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2025

| Patent document cited in search report | | Publication date | Patent family member(s) | | Publication date |
|---|---|---|---|---|---|
| EP 4131484 | A1 | 08-02-2023 | CN | 114982009 A | 30-08-2022 |
| | | | EP | 4131484 A1 | 08-02-2023 |
| | | | US | 2023034617 A1 | 02-02-2023 |
| | | | WO | 2021189349 A1 | 30-09-2021 |
| US 2022123289 | A1 | 21-04-2022 | CN | 114373889 A | 19-04-2022 |
| | | | DE | 102021126672 A1 | 21-04-2022 |
| | | | KR | 20220049997 A | 22-04-2022 |
| | | | KR | 20230109122 A | 19-07-2023 |
| | | | US | 2022123289 A1 | 21-04-2022 |
| US 2014349180 | A1 | 27-11-2014 | KR | 20140139294 A | 05-12-2014 |
| | | | US | 2014349180 A1 | 27-11-2014 |
| EP 3133678 | A1 | 22-02-2017 | CN | 106233511 A | 14-12-2016 |
| | | | EP | 3133678 A1 | 22-02-2017 |
| | | | JP | 5956690 B2 | 27-07-2016 |
| | | | JP | WO2015159935 A1 | 13-04-2017 |
| | | | KR | 20160126017 A | 01-11-2016 |
| | | | US | 2017040610 A1 | 09-02-2017 |
| | | | WO | 2015159935 A1 | 22-10-2015 |

EPO FORM P0459

For more details about this annex : see Official Journal of the European Patent Office, No. 12/82